(19) Europäisches Patentamt

**European Patent Office**

Office européen des brevets

(11) Numéro de publication : **0 024 974**
**B1**

## (12) FASCICULE DE BREVET EUROPÉEN

(45) Date de publication du fascicule du brevet : · 
**02.05.84**

(21) Numéro de dépôt : **80401178.1**

(22) Date de dépôt : **12.08.80**

(51) Int. Cl.³ : **A 01 M 25/00// A01N25/08**

(54) **Procédé de fabrication d'appâts empoisonnés, notamment pour rongeurs.**

(30) Priorité : **13.08.79 FR 7920819**

(43) Date de publication de la demande :
**11.03.81 Bulletin 81/10**

(45) Mention de la délivrance du brevet :
**02.05.84 Bulletin 84/18**

(84) Etats contractants désignés :
**BE DE GB IT NL**

(56) Documents cités :
**BE-A- 622 906**
**CH-B- 434 861**
**DE-A- 1 482 371**
**DE-A- 2 158 880**
**DE-B- 1 048 069**
**FR-A- 1 523 437**
**GB-A- 1 026 823**
**GB-A- 1 259 280**
**US-A- 3 032 915**

(73) Titulaire : **Chevallier, Robert**
**Chez Monsieur Sozzani 105, Boulevard Gambetta**
**F-06000 Nice (FR)**

(72) Inventeur : **Chevallier, Robert**
**Chez Monsieur Sozzani 105, Boulevard Gambetta**
**F-06000 Nice (FR)**

(74) Mandataire : **Hautier, Jean-Louis**
**OFFICE MEDITERRANEEN DE BREVETS D'INVEN-**
**TION 24 rue Masséna**
**F-06000 Nice (FR)**

EP 0 024 974 B1

Jouve, 18, rue St-Denis, 75001 Paris, France

## Procédé de fabrication d'appâts empoisonnés, notamment pour rongeurs

### Domaine technique

La présente invention concerne un procédé de fabrication d'appâts empoisonnés, notamment pour rongeurs, suivant lequel la matière toxique liquide est introduite dans des grains de matière support comestible.

Elle concerne aussi les appâts fabriqués suivant ledit procédé.

### Problème posé

Il s'agit de fabriquer des appâts à base de grains empoisonnés et plus particulièrement des appâts susceptibles d'être efficaces contre les rongeurs, les rats notamment, et qui soient d'une utilisation aisée sans risque de contamination pour l'homme.

### Etat de la technique antérieure et inconvénients

On fabrique depuis longtemps des appâts empoisonnés sous forme de grains imprégnés de matières toxiques. Pour que ces appâts soient efficaces seulement sur les rongeurs, il est connu d'utiliser comme toxique des anti-coagulants comme le dicoumarol. Il faut signaler que l'imprégnation des grains est difficile car ceux-ci sont protégés par un tégument qui fait que le poison est localisé à la surface et ne pénètre pratiquement pas au centre de la graine. De toutes façons, les grains ainsi traités sont sensibles à l'humidité et se détériorent. Le poison qui les entoure s'élimine, ce qui pollue dangereusement le milieu, rend dangereuse la manipulation et fait perdre de l'efficacité au produit. Enfin, ils ont une densité telle qu'ils ne flottent pas à la surface de l'eau, en particulier dans les égouts. Or, les rats ne mangent pas ce qui est immergé.

Pour protéger l'appât des incidences climatiques, on a proposé des petits sachets imperméables qui les renferment. En particulier, le brevet américain 3.032.915 prévoit une enveloppe hermétiquement scellée, constituée, par exemple, d'un film de polyéthylène de 40 à 80 microns d'épaisseur qui résiste aux influences chimiques et mécaniques. Le rongeur peut facilement déchirer ce film pour accéder à la nourriture empoisonnée. Mais à partir de ce moment, l'enveloppe perd ses qualités protectrices et l'appât devient dangereux pour quiconque et il n'est plus isolé des influences climatiques.

La demande de brevet allemand publiée sous le n° 2.158.880 prévoit des comprimés de matière comestible qui sont enrobés dans une matière imperméable ou tout au moins qui repousse l'eau. Toutefois, cet enrobage peut être détérioré mécaniquement et il laisse apparaître le produit dangereux. En outre, un produit comprimé a une densité importante qui lui interdit de flotter à la surface de l'eau.

Le brevet britannique n° 1.026.823 prévoit d'enrober des matières comestibles qui contiennent une dose mortelle de poison, avec une matière inerte acceptée par l'animal, cette matière résistant à l'eau. Toutefois, on retrouve le même inconvénient que précédemment par le fait que, une fois l'enrobage enlevé par une action mécanique, on se trouve directement en contact de la matière dangereuse et que la densité du produit est importante, ce qui gêne son flottage.

On retrouve les mêmes inconvénients dans le brevet britannique n° 1.259.280 qui prévoit des produits comprenant un noyau central de matière comestible entouré d'un poison pour rongeurs, l'ensemble étant enrobé dans un film étanche à l'eau.

Par ailleurs, les normes de certains pays, en France notamment, donnent une limite supérieure à la quantité de poison incorporé dans le produit. Ainsi, la réglementation française exige que la proportion de poison soit inférieure ou égale à 0,025 % du poids du produit. Pour exterminer certains rongeurs résistants, il faut donc que ces animaux absorbent une quantité appréciable de nourriture. Or, on s'est aperçu que les rats avaient l'habitude de manger un petit nombre de graines à la fois. On a donc intérêt à trouver un produit relativement lourd qui pourra contenir une quantité de poison relativement importante en valeur absolue, ce qui est impossible avec les grains fournis par la nature sans traitement spécial. La présente invention est destinée à remédier à ces divers inconvénients.

### Exposé de l'invention

Le procédé de l'invention est caractérisé principalement par le fait que l'on combine les opérations suivantes :

a) on réalise, d'une part, une expansion importante des grains par une technique de chauffage en présence de paraffine acceptée par les rongeurs, suivant un mode opératoire déjà connu pour le maïs (pop-corn), qui multiplie le volume d'environ dix à vingt fois et permet d'obtenir une densité nettement inférieure à 1, la quantité de paraffine étant d'environ la moitié en poids du grain ;

b) on fabrique, d'autre part, un mélange homogène comprenant essentiellement de l'huile comestible, notamment une huile végétale bien digestible, 2 à 3 % de colorants et moins de 1 % de produits toxiques en prenant soin de ne pas élever la température au-delà de l'ambiante ;

c) on brasse à température ambiante, dans un mélangeur, les produits obtenus en a) et b) jusqu'à pénétration convenable du mélange homogène toxique dans les grains qui se détermine par la coloration des grains expansés ;

d) on pratique un premier enrobage, dit de concentration, des grains obtenus en c) dans une couche de matière imperméabilisante, acceptée par les rongeurs, non colorée, cristallisable, fusible à température de 60 à 65° environ et qui cristallise lentement en se refroidissant en déversant cette matière fondue juste au-dessus de la température de fusion sur le grain que l'on brasse dans un malaxeur, la proportion de matière d'enrobage étant légèrement inférieure en poids à celui du grain, le malaxage étant poursuivi jusqu'au moment où la cristallisation superficielle évite les agglomérations de grain ;

e) on pratique un deuxième enrobage, dit d'isolation, des grains obtenus en d) dans une deuxième couche d'une autre matière imperméable colorée, acceptée par les rongeurs, cristallisable, fusible à une température de 60 à 65° environ en déversant ladite matière fondue à une température très légèrement supérieure à la température de fusion sur les grains en cours de brassage dans un malaxeur, le malaxage étant poursuivi jusqu'au moment où la cristallisation superficielle évite les agglomérations de grain ; la proportion de matière d'enrobage étant, environ, deux fois en poids celle du grain, si bien, qu'au total, on obtient un appât pesant quatre à cinq fois environ le poids de grain initial qu'il contient, mais d'une densité d'environ 0,25 ;

f) on laisse enfin parfaire la cristallisation complète de la matière d'enrobage des grains en contrôlant la pénétration des enrobages dans des grains tests grâce à l'examen des strates colorés.

De préférence, on utilise un grain de maïs expansé, connu sous le nom de « pop-corn ». La matière grasse destinée à l'expansion des grains est une paraffine. De même, les matières d'enrobage sont des paraffines ou des cires microcristallines, d'origine pétrolière ou naturelle à température de fusion choisie, ladite température de fusion pouvant être modifiée par l'adjonction d'additifs. Ceci sera utile dans certains cas lorsqu'on voudra obtenir une température de fusion de la paraffine ou cire servant à l'enrobage extérieur plus élevée que celle de la paraffine du premier enrobage pour l'adapter au climat dans lequel le produit devra être utilisé.

En prévoyant une expansion des grains, on obtient une densité de ceux-ci nettement inférieure à un et il en est de même du produit fini qui flotte ainsi sur l'eau. La matière toxique utilisée est en général un anti-coagulant, en particulier du dicoumarol. L'appât obtenu suivant le procédé de l'invention se présente sous forme de grains expansés avec une imprégnation centrale de matière huileuse empoisonnée, une imprégnation intermédiaire de cire ou paraffine incolore et un enrobage externe imperméable de cire ou paraffine colorée, l'ensemble ayant une densité de l'ordre de 0,250.

## Solution au problème, avantages et résultat industriel

Le premier enrobage dit de concentration, détermine une pénétration de la cire micro-cristalline à l'intérieur de la surface extérieure du grain qui, puisqu'il est ici éclaté et expansé, ne comporte pas d'enveloppe et peut être facilement pénétré par ladite cire. Un résultat surprenant a été alors observé :

La cristallisation progressive de cette première couche d'enrobage se fait de l'extérieur vers l'intérieur en repoussant vers le centre du grain l'huile végétale digestive empoisonnée qui se concentre dans le milieu du grain. Ceci peut être observé facilement et contrôlé par la coloration particulière de cette huile empoisonnée.

L'enrobage d'isolation se fait sur une grande superficie extérieure du grain, ce qui permet, outre l'isolation classique, un contrôle de la densité du produit fini, comme on le verra dans la description ci-après.

On comprend que l'appât de la présente invention présente toutes les garanties de sécurité puisque, même si l'on enlève la couche extérieure d'enrobage d'isolation, le grain lui-même, mis à nu, n'est pas dangereux car la matière toxique est concentrée dans la partie centrale de celui-ci. Cette matière est, de ce fait, peu détectable par le rat aussi bien visuellement qu'olfactivement. On évite aussi les dépôts et la pollution par le poison.

En outre, malgré le poids de l'enrobage extérieur, on a un grain dont la densité est faible et qui flotte facilement.

De plus, le double enrobage assure une protection très efficace du grain contre les détériorations mécaniques.

Enfin, le poids important du grain enrobé permet d'y mettre, suivant les réglementations, un poids important de poison qui peut être de l'ordre de 30 fois plus élevé que celle que l'on peut également introduire dans un grain de maïs ou de blé ordinaire.

Il faut aussi signaler qu'un raticide de l'invention flotte sur l'eau et peut être entraîné dans les égouts, à la surface de l'eau où il est très efficace car les rats absorbent la nourriture qui flotte alors qu'ils dédaignent celle qui est au fond de l'eau. Les rats préfèrent d'ailleurs les produits de la taille du grain soufflé expansé (pop-corn), ainsi que sa forme et sa friabilité.

L'invention sera mieux comprise à l'aide de la description ci-après ainsi qu'avec les exemples qui y sont consignés.

## Description d'un mode de réalisation

A titre indicatif, on va donner ci-après un mode de fabrication d'une dose d'appât empoisonné suivant le procédé de l'invention.

Une première opération consiste à fabriquer le grain expansé. Celui qui donne les meilleurs résultats est le maïs américain que l'on expanse par la technique connue du soufflage du maïs par chauffage en présence d'une paraffine.

En partant de 500 g de maïs que l'on chauffe dans un récipient en ajoutant 250 g de paraffine, notamment celle commercialisée sous la marque « WAXREX 69 » par la société Mobil, on obtient 12 litres de maïs expansé soufflé (pop-corn). On sait que ce produit a une densité très faible.

Par ailleurs, on fabrique un mélange homogène d'huile de colza (1940 g), de colorant pétrolier rouge (50 g) et de produit toxique (10 g) commercialisé sous la marque « KOUMAPHENE » par la société Gaucher et Fils, 238, Rue Giraudeau à TOURS, INDRE-ET-LOIRE, FRANCE. L'huile de colza est choisie pour des raisons économiques mais d'autres huiles comestibles peuvent être utilisées et des essais satisfaisants ont été faits avec l'huile d'arachide, l'huile de tournesol et l'huile d'olive. Cette dernière huile est très appréciée par les rongeurs de la région méditerranéenne.

On brasse 125 grammes environ de mélange toxique obtenu avec les douze litres de maïs expansé soufflé de façon que tout le produit toxique soit absorbé par lesdits grains. Le colorant rouge du mélange toxique permet de contrôler à l'œil que tout le produit a été absorbé par les grains.

On procède ensuite à un premier enrobage, dit de concentration, dans une couche de matière acceptable par les rongeurs. Cette matière à raison de 400 g pour les douze litres (875 g) de grains de maïs empoisonnés est une cire naturelle, une paraffine ou tout autre constituant ayant les mêmes caractéristiques. Toutefois, on a eu d'excellents résultats en utilisant le produit « MOBILWAX 150 » de la société Mobil. Ce produit a un point de fusion de 65° environ. Il est chauffé au bain-marie pour le fondre juste audessus de sa température de fusion pour le rendre liquide et pouvoir le verser sur les grains brassés. On s'arrange toutefois pour éviter la surchauffe à cœur des grains car le « KOUMAPHENE » se dégrade à la chaleur trop forte. Ce brassage dure jusqu'au moment où la paraffine a été complètement absorbée par les grains de façon que ceux-ci ne s'agglomèrent plus. A ce moment, la cristallisation du produit est opérée non seulement à la surface du grain mais dans les couches intérieures de celui-ci.

On observe que la paraffine « MOBILWAX 150 » repousse le produit huileux empoisonné vers le centre de chaque grain et que la coloration de celui-ci change en conséquence. Une observation attentive expérimentale, consistant à couper des grains en deux à intervalles réguliers, permet d'observer que les cristaux de paraffine ou cire micro-cristalline, repoussent le produit toxique huileux vers le centre du grain, où il se concentre, à une vitesse telle que la migration est pratiquement terminée au bout de 48 heures. C'est pourquoi on désigne cet enrobage du qualificatif « de concentration ». Ce résultat très intéressant est inattendu, par rapport à l'enrobage classique sur un grain qui est entouré de son écorce ou tégument empêchant ce phénomène.

Il présente de gros avantages puisque le poison n'est plus détectable visuellement ni olfactivement par l'animal et qu'il ne constitue plus un danger lors de la manipulation puisque le poison ne peut se déposer sur les objets et parois qui entrent en contact avec lui.

On procède ensuite à un deuxième enrobage d'isolation des granules de maïs expansés et empoisonnés par immersion et brassage dans un bain de cire naturelle ou de paraffine. Dans le cas présent, on utilise un bain de 1 500 g pour 1 kg de maïs ainsi traité. Le bain est ainsi constitué par le produit « MOBILWAX 150 » de la Mobil. Ce produit a, comme on l'a vu, un point de fusion de 65° ; toutefois, la matière d'enrobage doit être appropriée au lieu d'emploi et aux conditions climatiques environnantes ; par exemple, pour des pays à climat chaud, on ajoute des dopes ou des durcisseurs afin d'élever son point de fusion sans nuire à l'attrait du produit fini ni à sa friabilité.

Un colorant orange est ajouté au bain à raison de deux grammes pour 1 500 g de « MOBILWAX 150 ». Ce colorant permet d'évaluer le degré d'enrobage de chaque grain. De la même façon que précédemment, on brasse les grains sur lesquels on a versé le « MOBILWAX 150 » fondu à une température légèrement supérieure à celle de la fusion et mélangé du colorant, jusqu'au moment où la cristallisation est telle qu'on ne constate plus d'agglomération de grains entre eux.

Cet enrobage final assure l'isolation et la protection des granules jusqu'au moment où ils sont consommés par les rongeurs. Il permet l'utilisation de l'appât empoisonné sur les lieux humides sans risques de dégradation et de pollution ultérieure.

On laisse ensuite reposer les produits pendant 48 heures environ de façon à laisser pénétrer les cires ou paraffines d'enrobage dans les grains pour que la migration repousse convenablement au centre la composition huileuse empoisonnée. On peut contrôler cette migration en découpant diamétralement un grain de temps à autre. La coloration de la composition huileuse, d'une part, et du produit d'enrobage externe, d'autre part, permet d'en suivre l'évolution.

Il faut signaler que la présentation et la composition de l'appât, sous forme friable, suivant la présente invention, exerce un pouvoir des plus attractifs sur les rongeurs qui en sont particulièrement friands.

Au point de vue efficacité, on constate qu'il suffit qu'un rat absorbe un seul grain de maïs pour qu'il soit touché de façon fatale.

**Revendications**

1. Procédé de fabrication d'appâts empoisonnés, notamment pour rongeurs, suivant lequel la matière toxique liquide est introduite dans des grains comestibles servant de support caractérisé par le fait que l'on combine les opérations suivantes :

a) on réalise, d'une part, une expansion importante des grains par une technique de chauffage en présence de paraffine acceptée par les rongeurs, suivant un mode opératoire déjà connu pour le maïs (pop-corn) qui multiplie le volume d'environ 10 à 20 fois et permet d'obtenir une densité nettement inférieure à 1, la quantité de paraffine étant d'environ la moitié en poids de celle du grain ;

b) on fabrique, d'autre part, un mélange homogène comprenant essentiellement de l'huile comestible, notamment une huile végétale bien digestible, 2 à 3 % du mélange en colorants et moins de 1 % de produits toxiques en prenant soin de ne pas élever la température au-delà de l'ambiante ;

c) on brasse à température ambiante, dans un mélangeur, les produits obtenus en a) et b) jusqu'à pénétration convenable du mélange homogène toxique dans les grains qui se détermine par la coloration des grains expansés ;

d) on pratique un premier enrobage, dit de concentration, des grains obtenus en c) dans une couche de matière imperméabilisante, acceptée par les rongeurs, non colorée, tels que des cires ou paraffines microcristallisables, fusible à température de 60° à 65° environ et qui cristallise lentement en se refroidissant, en déversant cette matière fondue juste au-dessus de la température de fusion sur le grain que l'on brasse dans un malaxeur, le poids de la matière d'enrobage représente 45 % de celui du grain traité, le malaxage étant poursuivi jusqu'au moment où la cristallisation superficielle évite les agglomérations de grain ;

e) on pratique un deuxième enrobage, dit d'isolation, des grains obtenus en d) dans une deuxième couche d'une matière imperméable colorée, pouvant être différente de la première couche, acceptée par les rongeurs, cristallisable, fusible à une température de 60 à 65° environ en déversant ladite matière fondue à une température très légèrement supérieure à la température de fusion sur les grains en cours de brassage dans un malaxeur, le malaxage étant poursuivi jusqu'au moment où la cristallisation superficielle évite les agglomérations de grain, la proportion de matière d'enrobage concernant la phase e) étant environ deux fois en poids celle du grain si bien, qu'au total, on obtient un appât pesant quatre à cinq fois environ le poids de grain initial qu'il contient, mais d'une densité d'environ 0,25 ;

f) on laisse enfin parfaire la cristallisation complète de la matière d'enrobage des grains en contrôlant la pénétration des enrobages dans des grains tests grâce à l'examen des strates colorés.

2. Procédé, tel que défini dans la revendication 1, caractérisé par le fait que le grain utilisé est un maïs expansé.

3. Procédé, tel que défini dans l'une quelconque des revendications 1 à 2, caractérisé par le fait que les matières d'enrobage sont des paraffines ou des cires micro-cristallines à température de fusion choisie, ladite température de fusion pouvant être modifiée par l'adjonction d'additifs.

4. Procédé, tel que défini dans la revendication 3, caractérisé par le fait que la température de fusion de la paraffine ou cire servant à l'enrobage extérieur est plus élevée que celle de la paraffine du premier enrobage et adaptée au climat dans lequel le produit sera utilisé.

5. Procédé, tel que défini dans la revendication 1, caractérisé par le fait que la matière toxique est un anti-coagulant.

6. Procédé, tel que défini dans la revendication 1 caractérisé par le fait que la matière toxique est du dicoumarol.

## Claims

1. Process for producing poisoned bait, especially for rodents, in which the toxic liquid substance is introduced into comestible grains serving as support, characterized in that the following operations are combined :

a) an important expansion of the grains is realised by heating in presence of a paraffine accepted by the rodents, following a mode of operation already known for maize (popcorn), which multiplies the volume about 10 to 20 fold and allows to obtain a density notably lower than 1, the quantity of the paraffine beeing about the half of the weight of the grains ;

b) a homogenous mixture is produced, comprising substantially a comestible oil, especially a well digestible vegetable oil, 2 to 3 % of the mixture of colorants and less than 1 % of toxic products, whereby care is taken that the temperature does not raise above room temperature ;

c) the products obtained in step a) and b) are agitated at room temperature in a mixer until the homogenous toxic mixture has penetrated suitably into the grains, which is determined by the coloration of the expanded grains ;

d) the grains obtained in step c) are coated with a first coating, said of concentration, of a layer of an impermeabilising substance, which is accepted by the rodents and is not colored, as microcrystallizable waxes or paraffines, melting at temperatures of about 60° to 65° and crystallizing slowly at cooling, by pouring this substance melted just above the melting temperature over the grains beeing agitated in a kneading machine, the weight of the coating substance representing 45 % of the weight of the treated grains, the kneading beeing continued until the superficial crystallization prevents the agglomeration of the grains ;

e) the grains obtained in step d) are coated with a second coating, said of isolation, of a second layer of a colored impermeable substance, optionally beeing different of the first layer, accepted by the rodents, crystallizable, melting at a temperature of about 60 to 65°, by pouring the said substance, melted at a temperature slightly above the melting temperature, over the grains agitated in a kneading machine, the kneading beeing continued until the superficial crystallization prevents the agglomeration of the grains, the proportion of the coating substance in step e) beeing about twice the weight of the grains, so that in total a bait is produced, which has about 4 to 5 times the weight of the initial grains contained in it, but having a density of about 0.25 ;

f) the crystallization of the coating of the grains is allowed to complete by controlling the penetration of the coatings into test grains by examining the colored layers.

2. Process as claimed in claim 1, characterized in that the used grains are popped maize.

3. Process as claimed in claim 1 or 2, characterized in that the coating substances are paraffines or waxes, which are microcrystalline at the chosen melting temperature, the said melting temperature beeing optionally modified by additives.

4. Process as claimed in claim 3, characterized in that the melting temperature of the paraffine or wax used for the external coating is higher than the melting temperature of the paraffine of the first coating and is adapted to the climate in which the product is to be used.

5. Process as claimed in claim 1, characterized in that the toxic substance is an anticoagulant.

6. Process as claimed in claim 1, characterized in that the toxic substance is dicumarol.

**Ansprüche**

1. Verfahren zur Herstellung von vergifteten Ködern, insbesondere für Nagetiere, in dem die toxische flüssige Substanz in genießbare Körner, die als Träger dienen, eingeführt wird, dadurch gekennzeichnet, daß man folgende Maßnahmen kombiniert :

a) man führt einerseits eine wesentliche Aufblähung der Körner herbei durch Erhitzen in Gegenwart eines Paraffins, das von den Nagetieren angenommen wird, nach einer schon für Mais (Puffmais, Popcorn) bekannten Verfahrensweise, wobei das Volumen um etwa das 10-20fache erhöht wird und es möglich ist, eine deutlich niedrigere Dichte als 1 zu erhalten, wobei die Gewichtsmenge des Paraffins etwa die Hälfte der Gewichtsmenge der Körner beträgt ;

b) man stellt andererseits ein homogenes Gemisch her, das im wesentlichen ein genießbares Öl, insbesondere ein gut verdaubares Planzenöl, 2-3 % des Gemisches an Farbstoffen und unter 1 % an toxischen Produkten enthält, wobei man darauf achtet, daß die Temperatur Raumtemperatur nicht übersteigt ;

c) man bewegt bei Raumtemperatur in einem Mischer die nach a) und b) erhaltenen Produkte solange, bis das homogene toxische Gemisch entsprechend in die Körner eingedrungen ist, was man durch die Färbung der aufgeblähten Körner feststellt ;

d) man unterwirft die nach c) erhaltenen Körner einer ersten Umhüllung, der sogenannten Konzentrationsumhüllung, mit einer Schicht einer undurchlässig machenden Substanz, die von den Nagetieren angenommen wird und nicht gefärbt ist, wie mikrokristallisierbare Wachse oder Paraffine, die bei Temperaturen von etwa 60° bis 65° schmelzen und beim Abkühlen langsam auskristallisieren, wobei man diese gerade über der Schmelztemperatur geschmolzene Substanz über die in einem Kneter bewegten Körner gießt, wobei das Gewicht der Umhüllungssubstanz 45 % des Gewichts der behandelten Körner beträgt und das Kneten solange fortgesetzt wird, bis die oberflächliche Kristallisation eine Agglomeration der Körner verhindert ;

e) man unterwirft die nach d) erhaltenen Körner einer zweiten Umhüllung, der sogenannten Isolationsumhüllung, mit einer zweiten Schicht einer undurchlässigen, gefärbten Substanz, die von der ersten Schicht verschieden sein kann, von den Nagetieren angenommen wird, kristallisiert und bei einer Temperatur von etwa 60° bis 65° schmilzt, wobei man die genannte, bei einer Temperatur, die nur geringfügig über der Schmelztemperatur liegt, geschmolzene Substanz über die in einem Kneter bewegten Körner gießt, das Kneten solange durchführt, bis die oberflächliche Kristallisation die Agglomeration der Körner verhindert, wobei der Gewichtsanteil der Umhüllungssubstanz in der Stufe e) etwa das Doppelte des Gewichtsanteils der Körner beträgt, so daß man insgesamt einen Köder erhält, dessen Gewicht etwa das 4 bis 5fache des Aufgangsgewichts der in ihm enthaltenen Körner beträgt, der jedoch eine Dichte von etwa 0,25 hat ;

f) man lässt die Umhüllungsubstanz der Körner vollständig auskristallisieren, indem man das Eindringen der Umhüllungen in Testkörner durch Untersuchen der gefärbten Schichten kontrolliert.

2. Verfahren nach Anspruch 1, dadurch gekennzeichnet, daß die verwendeten Körner aufgeblähter Mais sind.

3. Verfahren nach einem der Ansprüche 1 oder 2, dadurch gekennzeichnet, daß die Umhüllungssubstanzen Paraffine oder Wachse sind, die bei der gewählten Schmelztemperatur mikrokristallin sind, wobei die genannte Schmelztemperatur durch zusätze verändert werden kann.

4. Verfahren nach Anspruch 3, dadurch gekennzeichnet, daß die Schmelztemperatur des Paraffins oder des Wachses für die äußere Umhüllung höher ist als die Schmelztemperatur des Paraffins der ersten Umhüllung und an das Klima angepasst ist, in dem Produkt verwendet werden soll.

5. Verfahren nach Anspruch 1, dadurch gekennzeichnet, daß die toxische Substanz ein Antikoagulans ist.

6. Verfahren nach Anspruch 1, dadurch gekennzeichnet, daß die toxische Substanz Dicumarol ist.